# EUROPEAN PATENT APPLICATION

(11) **EP 4 832 610 A1**
(43) Date of publication of application: **28.10.2026**
(21) Application number: 25738352.1
(22) Date of filing: 06.01.2025
(51) Int. Cl.: H04W 72/044

(54) **ELECTRONIC DEVICE, METHOD FOR WIRELESS COMMUNICATION, AND COMPUTER-READABLE STORAGE MEDIUM**

(30) Priority: 11.01.2024 CN 202410044536
(71) Applicant: Sony Group Corporation, Tokyo 108-0075 (JP)
(72) Inventor: CUI, Tao, Beijing 100027 (CN); SUN, Chen, Beijing 100027 (CN); BAI, Yingshuang, Beijing 100027 (CN)
(74) Representative: D Young & Co LLP
(86) International application number: PCT/CN2025/070701
(87) International publication number: WO 2025/148821

(57) **Abstract**

The present application provides an electronic device, a method for wireless communication, and a computer-readable storage medium. An electronic device on a terminal side may comprise at least one processor and at least one memory, the at least one memory comprising a computer program code. The at least one memory and the computer program code are configured to, by means of the at least one processor, enable the electronic device to execute: obtaining a beam measurement result for a measurement beam; and sending a non-compliance report to a network side device if the obtained beam measurement result does not conform to the requirements of a beam prediction model for a beam measurement result to be inputted.

## Description

This application claims priority to Chinese Patent Application No. 202410044536.7 titled "ELECTRONIC DEVICE, METHOD FOR WIRELESS COMMUNICATION, AND COMPUTER-READABLE STORAGE MEDIUM", filed on January 11, 2024 with the China National Intellectual Property Administration, which is incorporated herein by reference in its entirety.

### FIELD

The present disclosure relates to the technical field of wireless communication, and in particular to an electronic device, a method for wireless communication, and a computer-readable storage medium that facilitate sharing information related to input data of a beam prediction model between a network side and a user equipment (UE) side.

### BACKGROUND

With the development of technologies in artificial intelligence (AI)/machine learning (ML), the application of AI/ML models in the field of wireless communication has received increasing attention.

At present, beam management using a prediction result of an AI/ML-based beam prediction model is one of the important research directions. The beam prediction model may be trained using beam measurement results for measurement beams as historical data, and predicted beam information is then obtained through the trained beam prediction model based on, for example, currently obtained beam measurement results. In this way, the beam management using predicted beam information can at least partially replace a traditional beam scanning process, and thereby overhead is reduced.

To effectively utilize a beam prediction model, certain requirements may be placed on input data (i.e., to-be-inputted beam measurement results) for the beam prediction model.

### SUMMARY

Hereinafter provided is a brief summary of the present disclosure, which is intended to provide a basic understanding of aspects of the present disclosure. It should be understood, however, that this summary is not an exhaustive overview of the present disclosure. The summary is not intended to identify key or critical portions of the present disclosure or to delineate the scope of the disclosure. The purpose is merely to present some concepts about the present disclosure in a simplified form, as a prelude to the more detailed description that is presented later.

At least one aspect of the present disclosure aims to provide an electronic device, a method for wireless communication, and a computer-readable storage medium, with which a situation that a beam measurement result fails to meet a requirement of a beam prediction model for input data (also referred to herein as a requirement of a beam prediction model for an input or a "requirement") is shared between a network side and a UE side, thereby facilitating appropriate subsequent processing by the network side and/or the UE side based on the non-conformance.

According to a first aspect of the present disclosure, an electronic device on a terminal side is provided. The electronic device includes at least one processor and at least one memory, where the at least one memory includes computer program code. The at least one memory and the computer program code are configured to cause, through the at least one processor, the electronic device to: obtain a beam measurement result for a measurement beam; and transmit a non-conformance report to a network-side device in a case where the obtained beam measurement result fails to meet a requirement of a beam prediction model for a to-be-inputted beam measurement result.

According to the first aspect of the present disclosure, a method for wireless communication is further provided. The method includes: obtaining a beam measurement result for a measurement beam; and transmitting a non-conformance report to a network-side device in a case where the obtained beam measurement result fails to meet a requirement of a beam prediction model for a to-be-inputted beam measurement result.

According to a second aspect of the present disclosure, an electronic device on a network side is further provided. The electronic device includes at least one processor and at least one memory, where the at least one memory includes computer program code. The at least one memory and the computer program code are configured to cause, through the at least one processor, the electronic device to: receive, from a terminal device, a non-conformance report indicating that a beam measurement result for a measurement beam obtained by the terminal device fails to meet a requirement of a beam prediction model for a to-be-inputted beam measurement result.

According to the second aspect of the present disclosure, a method for wireless communication is further provided. The method includes: receiving, from a terminal device, a non-conformance report indicating that a beam measurement result for a measurement beam obtained by the terminal device fails to meet a requirement of a beam prediction model for a to-be-inputted beam measurement result.

According to another aspect of the present disclosure, a non-transitory computer-readable storage medium storing computer program code is further provided. The computer program code causes, through a processor in an electronic device, the electronic device to perform the method for wireless communication according to the first aspect or the second aspect described above.

According to other aspects of the present disclosure, computer program code and a computer program product for implementing the above-described method according to the present disclosure are further provided.

According to at least one aspect of embodiments of the present disclosure, a situation that a beam measurement result fails to meet a requirement of a beam prediction model for input data is shared between a network side and a UE side, thereby facilitating appropriate subsequent processing by the network side and/or the UE side based on the non-conformance.

Other aspects of the embodiments of the present disclosure are set forth in the following sections of the specification. The detailed description is provided to fully disclose preferred embodiments of the embodiments of the present disclosure, rather than to impose limitations thereon.

### BRIEF DESCRIPTION OF THE DRAWINGS

The accompanying drawings described herein are only for illustrative purposes of selected embodiments, rather than all possible embodiments, and are not intended to limit the scope of the present disclosure. In the drawings:
FIG. 1 is a schematic diagram illustrating beam prediction by using a beam prediction model;
FIG. 2 is a block diagram illustrating an exemplary configuration of an electronic device according to a first embodiment of the present disclosure;
FIG. 3A and FIG. 3B are flowcharts illustrating example signaling interactions of sharing relevant information about a beam prediction model between a terminal-side electronic device (UE) and a network-side device (gNB);
FIG. 4 is a flowchart illustrating an example signaling interaction where a UE sends a non-conformance report to a gNB;
FIG. 5 is a flowchart illustrating an example signaling interaction between a UE and a gNB in a case where a beam measurement result fails to meet a requirement;
FIG. 6 is a flowchart illustrating an example signaling interaction between a UE and a gNB in a case where a beam measurement result fails to meet a requirement, provided that a beam prediction model is deployed on a network side;
FIG. 7 is a flowchart illustrating an example signaling interaction between a UE and a gNB in a case where a beam measurement result meets a requirement, provided that a beam prediction model is deployed on a network side;
FIG. 8 is a flowchart illustrating an example signaling interaction between a UE and a gNB in a case where a beam measurement result fails to meet a requirement, provided that a beam prediction model is deployed on a terminal side;
FIG. 9 is a flowchart illustrating an example signaling interaction between a UE and a gNB in a case where a beam measurement result meets a requirement, provided that a beam prediction model is deployed on a terminal side;
FIG. 10 is a block diagram illustrating an exemplary configuration of an electronic device according to a second embodiment of the present disclosure;
FIG. 11 is a schematic diagram illustrating a training or optimization process of a beam prediction model;
FIG. 12 is a flowchart illustrating a process example of a method for wireless communication according to a first embodiment of the present disclosure;
FIG. 13 is a flowchart illustrating a process example of a method for wireless communication according to a second embodiment of the present disclosure;
FIG. 14 is a block diagram illustrating a first example of a schematic configuration of an eNB to which the technology of the present disclosure is applicable;
FIG. 15 is a block diagram illustrating a second example of a schematic configuration of an eNB to which the technology of the present disclosure is applicable;
FIG. 16 is a block diagram illustrating an example of a schematic configuration of a smart phone to which the technology of the present disclosure is applicable; and
FIG. 17 is a block diagram illustrating an example of a schematic configuration of an automobile navigation device to which the technology of the present disclosure is applicable.

Although the present disclosure is easily subjected to various modifications and replacements, specific embodiments thereof, as examples, are shown in the drawings and described in detail here. However, it should be understood that, the description of specific embodiments herein is not intended to limit the present disclosure to specific forms that are disclosed. On the contrary, an object of the present disclosure is to cover all modifications, equivalents and replacements that fall within the spirit and scope of the present disclosure. It should be noted that throughout the several drawings, corresponding components are indicated by corresponding reference numerals.

### DETAILED DESCRIPTION

Examples of the present disclosure are now fully described with reference to the accompanying drawings. The following description is merely substantially exemplary and is not intended to limit the present disclosure, an application or use thereof.

Exemplary embodiments are provided so that the present disclosure is described in detail and fully conveys the scope thereof to those skilled in the art. Examples of specific components, apparatus, methods and other specific details are set forth to provide detailed understanding of embodiments of the present disclosure. It will be apparent to those skilled in the art that the exemplary embodiments may be implemented in many different forms without the use of specific details, and they should not be construed as limiting the scope of the present disclosure. In some exemplary embodiments, well-known processes, well-known structures, and well-known technologies are not described in detail.

The description is given in the following order.
1 Overview
2. Exemplary Configuration of Electronic Device according to First embodiment
   2.1 Exemplary Configuration
   2.2 Example Processing
3. Exemplary Configuration of Electronic Device according to Second Embodiment
   3.1 Exemplary Configuration
   3.2 Example Processing
   3.3 Other (Training and Optimization of Beam Prediction Model)
4. Method Embodiment
5. Application Example

### <1 Overview>

As a prelude, this section first briefly introduces a beam prediction model and application thereof in beam management.

As mentioned above, a beam prediction model based on an AI/ML model may be trained using historical data of beam measurement, and the trained model may then be utilized to predict beam information. Various types of AI/ML models may be applied in the beam prediction model, including but not limited to neural networks (such as a convolutional neural network (CNN), which is not limited in the present disclosure).

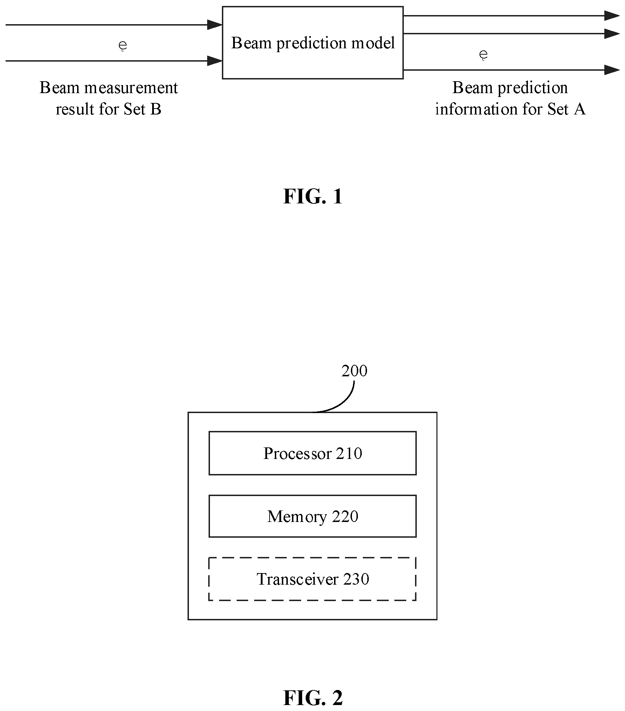

As an example, the beam management use case 1 (BM-Case 1) concerning airspace downlink beam prediction, discussed at a recent 3rd generation partnership project (3GPP) meeting regarding AI/ML model-based beam management may be considered. In downlink beam prediction such as the BM-Case 1, as schematically illustrated in FIG. 1, a trained AI/ML-based beam prediction model may take beam measurement results for (downlink) measurement beams in beam set B (Set B) as an input, and output beam prediction information for a (downlink) candidate beam in beam set A (Set A). Here, the beam set B may be different from the beam set A, or may be a subset of the beam set A.

Here, the beam measurement results inputted to the beam prediction model may include or indicate, for example, identification information (such as beam ID) and beam quality obtained through measurement for each measurement beam in the beam set B, and may optionally include other relevant information for determining quality of a measurement beam, and the like. Furthermore, the predicted beam information outputted by the beam prediction model may include or indicate, for example, identification information (such as beam ID) of each candidate beam that is in the beam set A and serves as a predicted beam, and beam quality of each predicted beam. In addition, the predicted beam information may optionally include or indicate a probability (and optionally an associated confidence level) of each predicted beam as an optimal beam and/or other relevant information for determining a priority of the predicted beam, and the like.

Here, the predicted beam outputted by the beam prediction model may be, for example, the top N candidate beams with the highest beam quality among all candidate beams in the beam set A, or L candidate beams with beam quality above a predetermined threshold, where N and L are natural numbers. The beam quality may include an absolute intensity or relative intensity of a beam, such as a reference signal receiving power (RSRP) or L1-RSRP. In addition, the beam quality may further include a signal to interference plus noise ratio (SINR), and the like.

In beam management, the predicted beam information obtained from the aforementioned beam prediction model may, to some extent, replace a beam measurement result obtained from existing beam scanning or beam measurement processes, so that overhead is reduced.

In the use case of a beam prediction model such as that shown in FIG. 1, to ensure a quality of input data for achieving good prediction performance, the beam prediction model may have a certain requirement for the input data, that is, a certain screening criterion for the beam set B (or a measurement result therefor). For example, screening criterion may include that the beam set B should include at least a designated number of measurement beams, and that the beam quality of each measurement beam is above a predetermined threshold, and the like.

To obtain a beam measurement result for the beam set B that meets the requirement, a network side (such as a base station) may pre-configure measurement resource for measurement for (candidate) measurement beams in a beam set C (Set C) for a UE based on relevant information on the beam prediction model, and select, randomly or according to an additional criterion, at least a designated number of beams from beams whose measurement results meet the screening criterion (for example, having beam quality above the predetermined threshold) to form the beam set B whose beam measurement result is inputted into the model. Here, the number of beams in the beam set C may be greater than the designated number, and preferably covers a wide spatial range.

However, even if the UE performs beam measurement on all beams in the beam set C (Set C), the obtained beam measurement result may not meet the requirement (i.e., fail to form the required beam set B). In this case, ignoring the aforementioned non-conformance and directly inputting beam measurement result into the beam prediction model without any additional processing may lead to decrease in prediction performance of the model.

In view of the above, proposed in the present disclosure involves a concept of transmitting a non-conformance report to the network-side device in a case where the beam measurement result obtained by the UE fails to meet a requirement of the beam prediction model for a to-be-inputted beam measurement result. In this way, the non-conformance situation is shared between the network side and the UE side, thereby facilitating appropriate subsequent processing by the network side and/or the UE side based on the non-conformance.

Next, device/method embodiments and various preferred examples and processes based on the above-described concept are described with reference to the example of a beam prediction model in FIG. 1. It is noted that although the application background and detailed description in the present disclosure are introduced with an example where the downlink beam serves as the measurement beam and the UE obtains the beam measurement result and sends the non-conformance report to the network side, those skilled in the art shall understand, based on the present disclosure, that the present disclosure is not limited to downlink beam management and can be appropriately applied to uplink beam management (i.e., the measurement beam may be an uplink beam, and the network side device may obtain a beam measurement result and transmit a non-conformance message similar to the non-conformance report to the UE), which is not described in further detail here.

### <2. Exemplary Configuration of Electronic Device according to First embodiment>

### [2.1 Exemplary Configuration]

FIG. 2 is a block diagram illustrating an exemplary configuration of an electronic device according to a first embodiment of the present disclosure.

As shown in FIG. 2, the electronic device 200 may include one or more processors 210 and one or more memories 220 including computer program code, and optionally includes a transceiver 230. The memory 220 and the computer program code included therein may be configured to cause, through the processor 210, the electronic device 200 to perform related processing or operation. Optionally, the memory 220 may be further configured to store various data, information, and the like. The transceiver 230 is configured, for example, to transmit information to or receive information from another device, and may perform corresponding processing or operation under the control of the memory 220 and the computer program code included therein and the processor 210.

In the context of the present disclosure, when necessary, the processing and operation performed by the electronic device 200 may be implemented by means of other components in the electronic device 200 in addition to the processor 210 and memory 220 (e.g., optionally the transceiver 230), but implementation details of these other components are not the focus of the present disclosure and are therefore not described in further detail.

Here, components of the electronic device 200 (for example, but not limited to, the processor, the memory, and/or the transceiver) may be included in the processing circuitry. It should be noted that the electronic device 200 may include a single processing circuit or multiple processing circuits. Further, the processing circuitry may include various discrete functional units for performing various different functions and/or operations. It should be noted that these functional units may be physical entities or logical entities, and units with different names may be implemented by a same physical entity.

Furthermore, although an example where the electronic device 200 includes the processor 210, the memory 220, and the transceiver 230 is schematically shown in FIG. 2, the functional configuration of the electronic device 200 is not limited thereto. For example, the electronic device 200 may include a processing unit, a storage unit, and/or a communication unit which replaces the above-mentioned processor, memory and/or transceiver, respectively, and has the same or similar functions and/or configurations as the above-mentioned processor, memory, and/or transceiver, respectively, which are not described in further detail here.

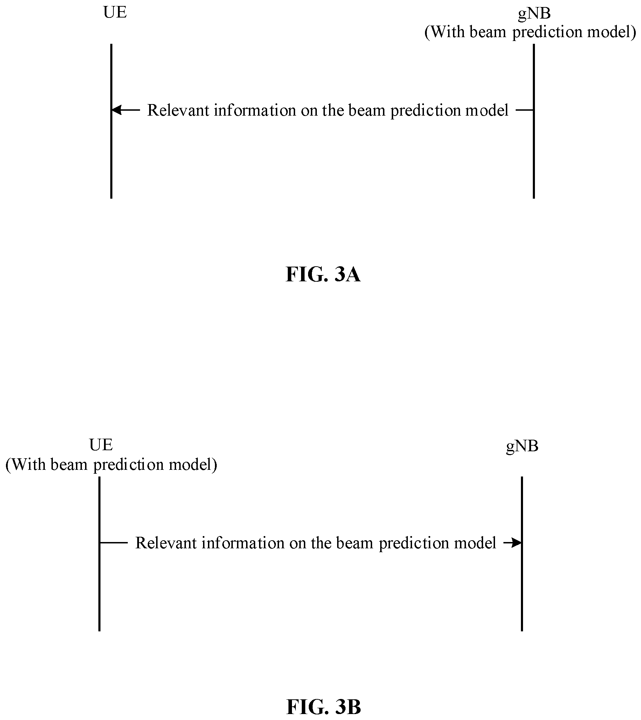

In this embodiment, the electronic device 200 is a terminal-side device, such as a UE. The electronic device 200 may not be provided with a beam prediction model, but obtain, via the transceiver 230, relevant information on a beam prediction model from a device (for example, a network-side device such as a gNB) having a beam prediction model. Alternatively, the electronic device 200 may have a beam prediction model deployed thereon. That is, the beam prediction model may be stored in the memory 220, thereby enabling direct acquisition of predicted beam information based on a beam measurement result through the model (and sharing relevant information with a network-side device). This is not specifically limited in the present disclosure. Regardless of whether the beam prediction model is deployed on the terminal side or the network side, the two sides preferably share relevant information on the beam prediction model with each other in advance. FIG. 3A and FIG. 3B schematically illustrate example signaling interactions of sharing relevant information on a beam prediction model between the electronic device 200 as a UE and a network-side device gNB in two scenarios.

The relevant information on the beam prediction model shared between the terminal side and the network side includes, but not limited to, identification information of the model (model ID), a format and/or requirement for input data of the model, a format and/or requirement for output data of the model, and/or other model parameters. Here, as described above with reference to the example in FIG. 1, the requirement of the beam prediction model for input data may be understood as a requirement for a to-be-inputted beam measurement result of a measurement beam, such as those in beam set B. Therefore, in the present disclosure, the requirement may be simply referred to as a requirement for beam set B or Set B requirement, under a condition of causing no confusion.

According to an embodiment of the present disclosure, the memory 220 of the electronic device 200 and the computer program code included therein may be configured to cause, through the processor 210, the electronic device 200 to: obtain a beam measurement result for a measurement beam; and transmit a non-conformance report to a network-side device in a case where the obtained beam measurement result fails to meet a requirement of a beam prediction model for a to-be-inputted beam measurement result.

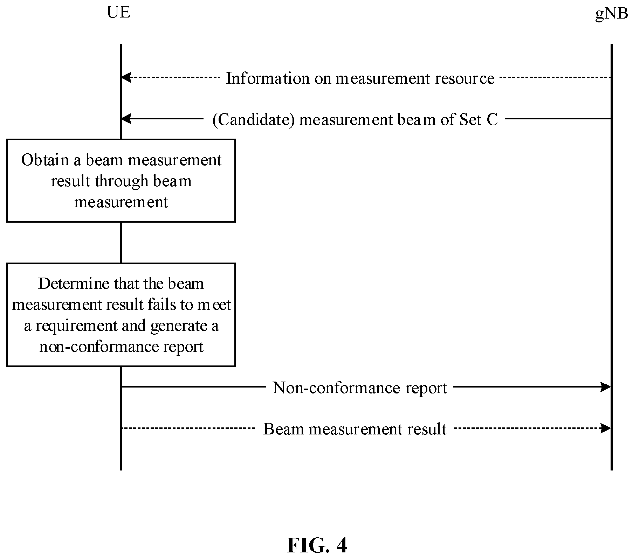

FIG. 4 is a flowchart illustrating an example signaling interaction where an electronic device 200, as a UE, sends a non-conformance report to a network-side device gNB (which, for example, has the configuration and functionality of an electronic device 1000 of the second embodiment described later). Next, an example of the processing performed by the electronic device 200 and further details thereof are described with reference to FIG. 4.

As shown in FIG. 4, optionally, the gNB may transmit information on measurement resource for a (candidate) measurement beam, i.e., beam set C (Set C), to the electronic device 200 as a UE. The information may include, for example, (measurement) configuration information of a downlink reference signal (the reference signal corresponding to a (candidate) measurement beam) for carrying a (candidate) measurement beam in the beam set C, indicating time-frequency resource for the downlink reference signal, beam information (e.g., beam identification information such as beam ID), and/or a measurement item (e.g., RSRP (L1-RSRP)). In an example, the downlink reference signal carrying the (candidate) measurement beam may be, for example, a resource set of aperiodic none zero power channel state information-reference signals (nzp-CSI-RS). In a case of an aperiodic reference signal, the information on measurement resource may optionally include, for example, a subsequently transmitted DCI trigger command, which is not described in detail here.

Then, as shown in FIG. 4, the gNB may transmit the (candidate) measurement beam of beam set C to the electronic device as a UE.

Accordingly, the memory 220 of the electronic device 200 and the computer program code included therein may cause, through the processor 210, the electronic device 200 to perform a series of processing or operation, such as receiving and measuring the (candidate) measurement beam transmitted by the gNB based on the received information on measurement resource, that is, obtaining a beam measurement result through beam measurement of the (candidate) measurement beam of the beam set C.

The series of processing or operation performed by the electronic device 200 may further include: determining whether the obtained beam measurement result meets a requirement of the beam prediction model for input data; and generating and transmitting a non-conformance report to the network-side device on determining that the requirement is not met, as shown in FIG. 4.

As an example, the requirement (Set B requirement) of the beam prediction model for an to-be-inputted beam measurement result may include one or more of the following: a number of measurement beams with beam qualities above a predetermined threshold (a number requirement or first requirement); a beam quality of a measurement beam (a quality requirement or second requirement); or a ranking of beam qualities of measurement beams (a ranking requirement or third requirement). The beam quality here may include an absolute intensity or relative intensity of the measurement beam, such as RSRP or L1-RSRP. In addition, the beam quality may further include SINR, and the like.

Accordingly, the non-conformance report generated and transmitted by the electronic device 200 may be in the form of a single bit or a sequence of bits. For example, a non-conformance report in a single-bit form may indicate a result of non-conformance by a bit 1 or 0; and a sequence of bits of length 1+n may have n additional bits to additionally indicate whether respective specific requirements (e.g., the first to third requirements mentioned above) are met, or to indicate the number of a specific requirement that is not met (where n is a natural number).

In this way, a situation where the beam measurement result for the (candidate) measurement beam fails to meet the requirement of the beam prediction model for input data and optional details of the non-conformance mentioned above can be shared between the electronic device 200 as a UE and the network-side device such as a gNB. This facilitates appropriate subsequent processing by the network side and/or the UE side based on the non-conformance.

In an example, as shown in FIG. 4, optionally, the series of processing or operation performed by the electronic device 200 may further include: in addition to the aforementioned non-conformance report, for example, in response to a request (not shown) for a beam measurement result transmitted from the gNB to the UE based on the non-conformance report, transmitting the obtained beam measurement result to the network-side device, for the network-side device to further understand relevant details.

### [2.2 Example Processing]

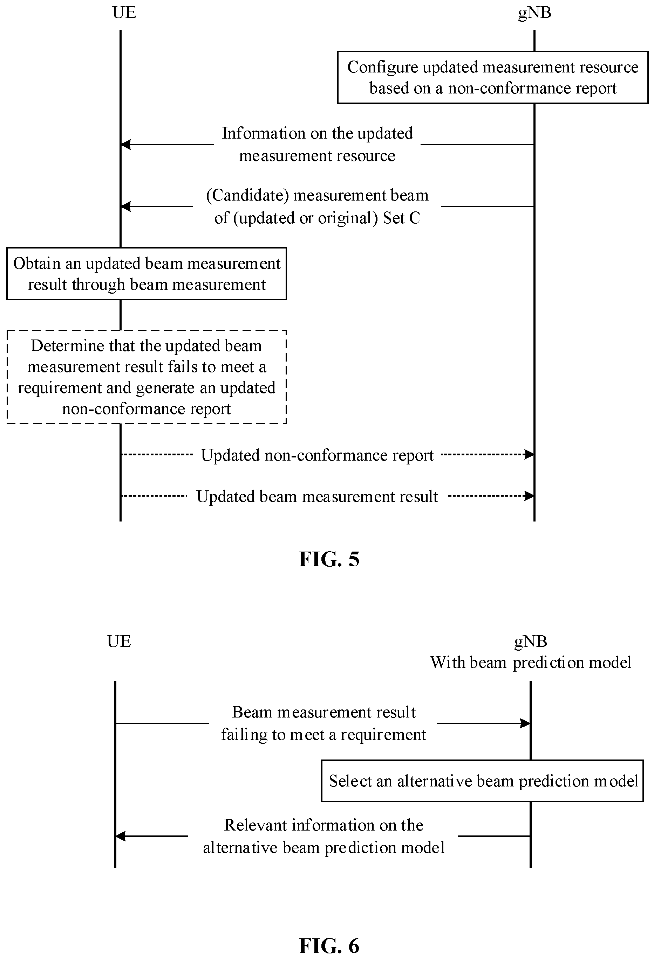

Next, further example processing performed by the electronic device 200 and related details thereof that are caused by the memory 220 of the electronic device 200 and the computer program code included therein through the processor 210 are described with reference to FIG. 5 to FIG. 9.

### (Example of reconfiguration and measurement in response to non-conformance report)

First, reference is made to FIG. 5, which illustrates an example signaling interaction between the electronic device 200 as a UE and a network-side device gNB in a case where a measurement result fails to meet a requirement.

As shown in FIG. 5, the gNB may configure, based on the received non-conformance report for the electronic device 200 as a terminal device UE, updated measurement resource for obtaining a beam measurement result, and may generate and transmit information on the configured updated measurement resource to the UE.

Next, the gNB may transmit a corresponding (candidate) measurement beam to the UE using the updated measurement resource.

Accordingly, the memory 220 of the electronic device 200 as a UE and the computer program code included therein may be configured to cause, through the processor 210, the electronic device 200 to perform a series of processing or operation, such as obtaining, through beam measurement, an updated beam measurement result for the measurement beam transmitted using the updated measurement resource.

In a first example of the updated measurement resource, the updated measurement resource configured by the gNB for the electronic device 200 as a UE may include an updated time and/or frequency resource of a reference signal (a downlink reference signal for carrying a measurement beam) corresponding to a measurement beam. In other words, the updated measurement resource may include updated time resource for a (candidate) measurement beam of the beam set C (also referred to as an original Set C) that has no change in terms of beams. Accordingly, the information on updated measurement resource generated and transmitted by the gNB may indicate an updated time and/or frequency resource of a reference signal corresponding to a measurement beam. In a preferred example, the updated measurement resource may include updated time resource of a downlink reference signal for carrying a measurement beam, and the information on the updated measurement resource indicates the updated time resource.

In this way, for example, an updated beam measurement result is obtained by using the (candidate) measurement beam of the original Set C via the above-described retransmission by the network-side device gNB and the remeasurement by the electronic device 200 as a UE. Accordingly, it can be avoided that unsatisfactoriness of a beam measurement result caused by the UE, such as due to mobility, temporarily locating at a disadvantageous position (for example, accidentally being in an occluded position) is regarded as unsatisfactoriness of the beam prediction model itself, which may further leads to inappropriate decisions such as model switching, starting model supervision, or even falling back to a traditional beam management mode (that is, a mode in which the beam prediction model is not applied).

In a second example of the updated measurement resource, alternatively (or additionally), the updated measurement resource configured by the gNB for the electronic device 200 as a UE may include an updated measurement beam, and the updated measurement beam preferably includes at least a newly added measurement beam. In other words, the updated measurement resource may include a measurement beam included in an updated beam set C (updated Set C).

The gNB may determine the updated measurement beam in various manners. For example, the manners may include, but not limited to: randomly determining, from all possible (for example, 64) downlink beams, multiple beams with a number greater than or equal to the number of beams in the original Set C; selecting, from all possible (for example, 64) downlink beams, a beam(s) with a wider spatial range than a coverage of a beam in the original Set C; retaining all beams in the original Set C, and determining, randomly or based on a spatial coverage, a new beam from all possible (for example, 64) downlink beams; in a case where the gNB receives a detailed non-conformance report and/or a specific beam measurement result from the UE, retaining only a beam with higher beam quality among beams in the original Set C, and determining, randomly or based on a spatial coverage, a new beam from all possible (for example 64) downlink beams; and the like.

Accordingly, information on the updated measurement resource generated and transmitted by the gNB may indicate the updated measurement beam, and preferably indicate at least the newly added measurement beam, and optionally further indicate a measurement beam that is still usable among the original measurement beams. In other words, information on the updated measurement resource may indicate a (candidate) measurement beam of the beam set C (updated Set C) that has a change in terms of beams.

In this way, for example, an updated beam measurement result is obtained by using the (candidate) measurement beam of the updated Set C via the above-described retransmission by the network-side device gNB and the remeasurement by the electronic device 200 as a UE. Accordingly, it can be avoided that unsatisfactoriness of a beam measurement result caused by a spatial coverage of (candidate) measurement beams in the original Set C being not suitable for a current wireless mobile environment of the UE is regarded as unsatisfactory of the beam prediction model itself, which may further leads to inappropriate decisions such as model switching, starting model supervision, or even falling back to the traditional beam management mode.

In practical applications, there is a situation where the updated beam measurement result obtained by the electronic device 200 as a UE still fails to meet the requirement (Set B requirement) of the beam prediction model for input data. Optionally, as shown in FIG. 5, the series of processing or operation performed by the electronic device 200 may further include: transmitting an updated non-conformance report to the network-side device (gNB) in a case where the obtained updated beam measurement result fails to meet the requirement; and alternatively or additionally, transmitting the obtained updated beam measurement result to the network-side device (gNB) (regardless of whether the updated beam measurement result meets the requirement).

The network-side device gNB may make a decision based on the updated non-conformance report and/or updated beam measurement result received from the UE, including but not limited to: determining to switch back to a traditional beam management model; determining to start supervision of the beam prediction model; in a case where the beam prediction model is deployed on the network side, determining to perform model switching, and selecting an alternative beam prediction model such that, for example, the updated beam measurement result meets a requirement of the alternative beam prediction model (which may require a smaller Set B and/or lower beam quality than the current beam prediction model, or the like); and the like.

### (Example of situation where beam prediction model is deployed on network side)

For the case where the beam prediction model is deployed on the network side, the memory 220 of the electronic device 200 as a UE and the computer program code included therein may be configured to cause, through the processor 210, the electronic device 200 to: transmit the obtained beam measurement result to the network-side device (regardless of whether the beam measurement result meets the requirement of the beam prediction model for input data).

In an example, in a case where the beam measurement result fails to meet an input requirement of the beam prediction model, the network-side device may perform subsequent processing based on the beam measurement result and the received non-conformance report. FIG. 6 illustrates an example signaling interaction between the electronic device 200 as a UE and the gNB in this example scenario. As shown in FIG. 6, the gNB may select an alternative beam prediction model such that the obtained beam measurement result meets a requirement of the alternative beam prediction model for a to-be-inputted beam measurement result (the alternative beam prediction model may require a smaller Set B and/or lower beam quality than the current beam prediction model, or the like). In addition, the gNB may further transmit relevant information on the alternative beam prediction model to the UE. Next, although not shown in the figure, the UE and the gNB may use the alternative beam prediction model as a beam prediction model after switching, for example, to perform processing related to beam prediction in various appropriate ways (such as an existing way).

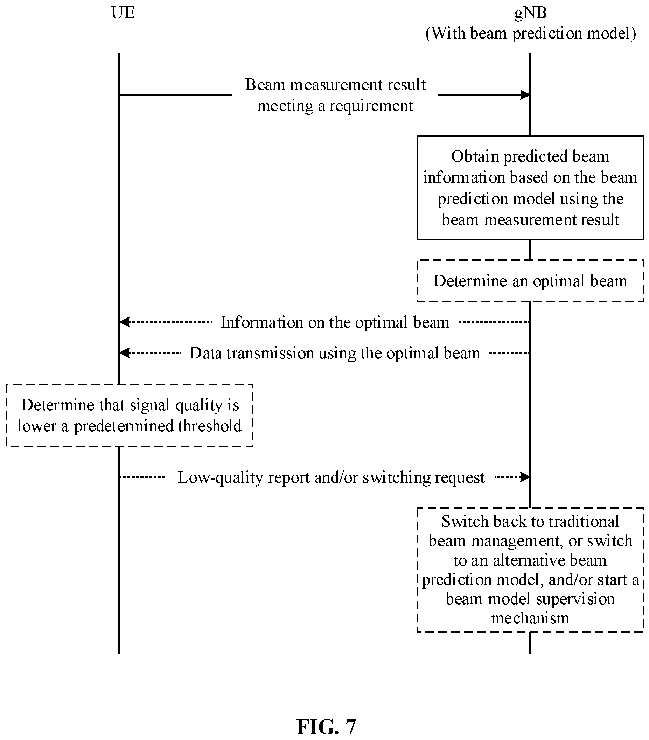

In another example, in a case where the beam measurement result meets the input requirement of the beam prediction model, the network-side device may obtain predicted beam information based on the beam prediction model using the beam measurement result that meets the requirement. FIG. 7 illustrates an example signaling interaction between the electronic device 200 as a UE and the gNB in this example scenario. As shown in FIG. 7, the gNB may obtain predicted beam information based on the beam prediction model using a beam measurement result that meets a requirement of the beam prediction model for input data.

Optionally, as shown in FIG. 7, the gNB may further determine an optimal beam based on the predicted beam information and perform data transmission using the optimal beam. Accordingly, the series of processing or operation performed by the electronic device 200 as a UE may further include: determining that a signal quality is lower than a predetermined threshold; and transmitting a low-quality report and/or switching request to the gNB. The gNB that receives the low-quality report and/or switching request may switch back to traditional beam management, or (attempt to) switch to another beam prediction model (for example, re-selecting a model based on various standards), or start a beam model supervision mechanism, or the like, which is not described in further detail here.

### (Example of situation where beam prediction model is deployed on terminal side)

For the case where the beam prediction model is deployed on the terminal side, the electronic device 200 as a UE does not necessarily transmit a beam measurement result that fails to meet the requirement of the beam prediction model for input data to the network-side device, but may, for example, perform model switching directly; and in addition, the electronic device 200 may perform beam prediction directly using a beam measurement result that meets the requirement.

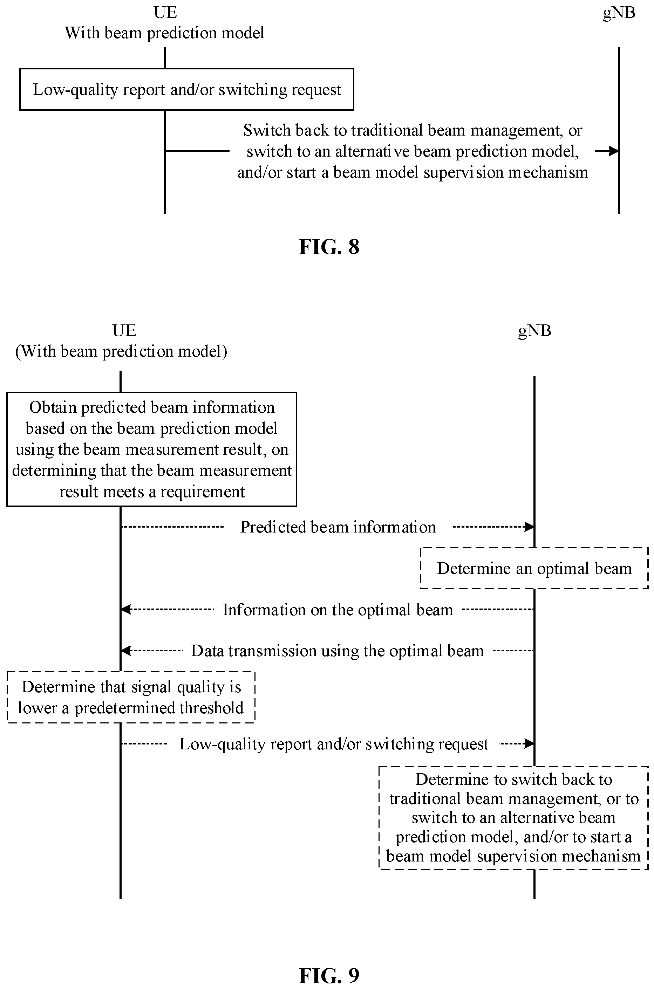

As an example, FIG. 8 illustrates an example signaling interaction between the electronic device 200 as a UE and a gNB in a case where a beam measurement result fails to meet a requirement. As shown in FIG. 8, in this case, the memory 220 of the electronic device 200 as a UE and the computer program code included therein may be configured to cause, through the processor 210, the electronic device 200 to: select an alternative beam prediction model such that the obtained beam measurement result meets a requirement of the alternative beam prediction model for a to-be-inputted beam measurement result (the alternative beam prediction model may require a smaller Set B and/or lower beam quality than the current beam prediction model, or the like); and optionally, transmit relevant information on the alternative beam prediction model to the network-side device (where the relevant information includes, but not limited to, identification information of the alternative beam prediction model, a necessary application condition, and a model switching related delay). Next, although not shown in the figure, the UE and the gNB may use the alternative beam prediction model as a beam prediction model after switching, for example, to perform processing related to beam prediction in various appropriate ways (such as an existing way).

As another example, FIG. 9 illustrates an example signaling interaction between the electronic device 200 as a UE and a gNB in a case where a beam measurement result meets a requirement. As shown in FIG. 9, in this case, the memory 220 of the electronic device 200 as a UE and the computer program code included therein may be configured to cause, through the processor 210, the electronic device 200 to: obtain predicted beam information based on the beam prediction model using a beam measurement result that meets the requirement; and optionally, transmit the beam prediction information to the network-side device.

Thereafter, optionally, the gNB may perform a processing similar to that in FIG. 7 to predict beam information to determine an optimal beam, and perform data transmission using the optimal beam. The processing or operation performed by the electronic device 200 as a UE may be similar to that in FIG. 7, that is, transmitting a low-quality report and/or switching request to the gNB in a case where a signal quality is lower than a predetermined threshold. The gNB that receives the low-quality report and/or switching request may switch back to traditional beam management, or determine to switch to another beam prediction model (and directly apply the decision of model switching or instruct the UE to implement the decision of model switching), or determine to start a beam model supervision mechanism, or the like, which is not described in further detail here.

Described above are the configuration example of the electronic device 200 on the terminal side according to the first embodiment of the present disclosure and example processing thereof.

In the above description, in addition to the terminal-side electronic device 200, the network-side device (such as the gNB shown in FIG. 4 to FIG. 9) that interacts with the terminal-side electronic device 200 and processing or operation performed by the network-side device are also described. In other words, according to the present disclosure, an electronic device on the network side (a second embodiment) is proposed in addition to the electronic device on the terminal side (the first embodiment). A description of an electronic device 1000 on a network side according to a second embodiment of the present disclosure is given below based on the description of the electronic device 200 on the terminal side according to the first embodiment of the present disclosure, and unnecessary details thereof are omitted.

### <3. Exemplary Configuration of Electronic Device according to Second Embodiment>

### [3.1 Exemplary Configuration]

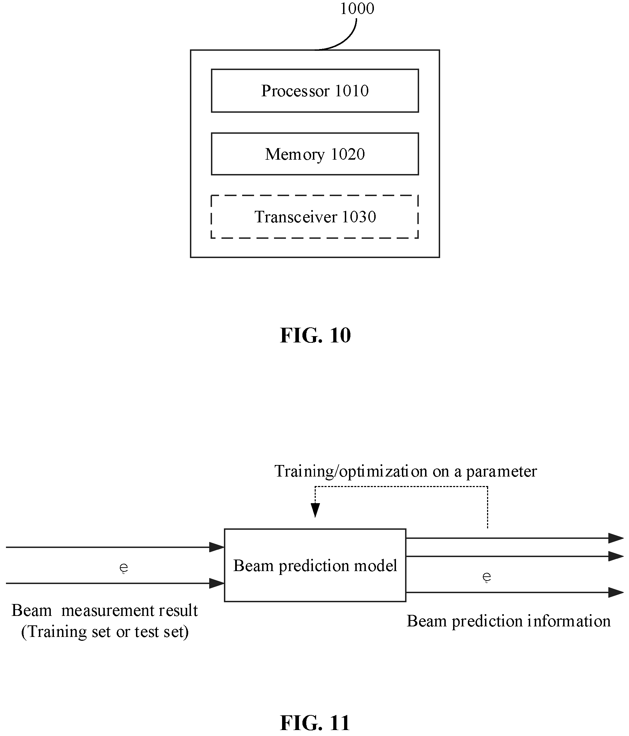

FIG. 10 is a block diagram illustrating an exemplary configuration of an electronic device on a network side according to a second embodiment of the present disclosure.

As shown in FIG. 10, the electronic device 1000 may include one or more processors 1010 and one or more memories 1020 including computer program code, and optionally includes a transceiver 1030. The memory 1020 and the computer program code included therein may be configured to cause, through the processor 1010, the electronic device 1000 to perform related processing or operation. Optionally, the memory 1020 may be further configured to store various data, information, and the like. The transceiver 1030 is configured, for example, to transmit information to or receive information from another device, and may perform corresponding processing or operation under the control of the memory 1020 and the computer program code included therein and the processor 1010.

In the context of the present disclosure, when necessary, the processing and operation performed by the electronic device 1000 may be implemented by means of other components in the electronic device 1000 in addition to the processor 1010 and memory 1020 (e.g., optionally the transceiver 1030), but implementation details of said other components are not the focus of the present disclosure and are therefore not described in further detail.

Here, components of the electronic device 1000 (for example, but not limited to, the processor, the memory, and/or the transceiver) may be included in the processing circuitry. It should be noted that the electronic device 1000 may include a single processing circuit or multiple processing circuits. Further, the processing circuitry may include various discrete functional units for performing various different functions and/or operations. It should be noted that these functional units may be physical entities or logical entities, and units with different names may be implemented by a same physical entity.

Furthermore, although an example where the electronic device 1000 includes the processor 1010, the memory 1020, and the transceiver 1030 is schematically shown in FIG. 10, the functional configuration of the electronic device 1000 is not limited thereto. For example, the electronic device 1000 may include a processing unit, a storage unit, and/or a communication unit which replaces the above-mentioned processor, memory and/or transceiver, respectively, and has the same or similar functions and/or configurations as the above-mentioned processor, memory, and/or transceiver, respectively, which are not described in further detail here.

In this embodiment, the electronic device 1000 is a network-side device, for example, a base station device such as the gNB as discussed in the detailed description of the first embodiment above. Preferably, the electronic device 1000 may have a beam prediction model deployed thereon. That is, the beam prediction model may be stored in the memory 1020 of the electronic device 1000, thereby enabling direct acquisition of predicted beam information through the model based on a beam measurement result obtained from a UE. Alternatively, the electronic device 1000 may not be provided with a beam prediction model, but obtain, via the transceiver 1030, relevant information on a beam prediction model from a device (for example, UE of the electronic device 1000 according to the first embodiment) having a beam prediction model deployed thereon. This is not specifically limited in the present disclosure. Regardless of whether the beam prediction model is deployed on the terminal side or the network side, preferably, the two sides share relevant information on the beam prediction model with each other in advance, as shown in FIG. 3A and FIG. 3B described above, which is not repeated here.

The relevant information on the beam prediction model shared between the terminal side and the network side includes, but not limited to, identification information of the model (model ID), a format and/or requirement for input data of the model, a format and/or requirement for output data of the model, and/or other model parameters.

According to an embodiment of the present disclosure, the memory 1020 of the electronic device 1000 and the computer program code included therein may be configured to cause, through the processor 1010, the electronic device 1000 to: receive, from a terminal device, a non-conformance report indicating that a beam measurement result for a measurement beam obtained by the terminal device fails to meet a requirement of a beam prediction model for a to-be-inputted beam measurement result.

As described above, as an example, the requirement (Set B requirement) of the beam prediction model for an to-be-inputted beam measurement result may include one or more of the following: a number of measurement beams with beam qualities above a predetermined threshold (a number requirement or first requirement); a beam quality of a measurement beam (a quality requirement or second requirement); or a ranking of beam qualities of measurement beams (a ranking requirement or third requirement). The beam quality here may include an absolute intensity or relative intensity of the measurement beam, such as RSRP or L1-RSRP. In addition, the beam quality may further include SINR, and the like.

Accordingly, the non-conformance report received by the electronic device 1000 may be in the form of a single bit or a sequence of bits. For example, a non-conformance report in a single-bit form may indicate a result of non-conformance by a bit 1 or 0; and a sequence of bits of length 1+n may have n additional bits to additionally indicate whether respective specific requirements (e.g., the first to third requirements mentioned above) are met, or to indicate the number of a specific requirement that is not met (where n is a natural number).

In this way, a situation where the beam measurement result for the (candidate) measurement beam fails to meet the requirement of the beam prediction model for input data and optional details of the non-conformance can be shared between the UE and the network-side electronic device 1000. This facilitates appropriate subsequent processing by the network side and/or the UE side based on the non-conformance.

An example signaling interaction for the electronic device 1000 as a gNB to obtain a non-conformance report from the terminal device UE may be as shown in FIG. 4 described above.

As shown in FIG. 4, optionally, to enable the UE to perform beam measurement as required, the memory 1020 of the electronic device 1000 and the computer program code included therein may be configured to cause, through the processor 1010, the electronic device 1000 to: send, to the UE, information on measurement resource for a (candidate) measurement beam, i.e., beam set C (Set C), and transmit the (candidate) measurement beam of the beam set C to the UE.

Accordingly, as shown in FIG. 4, the UE may receive and measure the (candidate) measurement beam transmitted by the electronic device 1000 as a gNB according to the received information on measurement resource, and generate and transmit a non-conformance report to the electronic device 1000 as a gNB on determining that the beam measurement result fails to meet the requirement. In addition, optionally, the processing or operation performed by the electronic device 1000 may further include: for example, transmitting a request (not shown) for a beam measurement result to the UE based on the non-conformance report, and receiving a beam measurement result transmitted from the UE in response to the request, to further understand relevant details.

### [3.2 Example Processing]

Next, further example processing performed by the electronic device 1000 and related details thereof that are caused by the memory 1020 of the electronic device 1000 and the computer program code included therein through the processor 1010 are described briefly with reference to FIG. 5 to FIG. 9 described above.

### (Example of reconfiguration and measurement in response to non-conformance report)

First, reference is made to FIG. 5. As shown in FIG. 5, the memory 1020 of the electronic device 1000 and the computer program code included therein may cause, through the processor 1010, the electronic device 1000 to perform the following processing and/or operation: configuring, for the UE based on the received non-conformance report, updated measurement resource for obtaining a beam measurement result, and generating and transmitting information on the configured updated measurement resource to the UE.

In addition, as shown in FIG. 5, the processing and/or operation performed by the electronic device 1000 may further include: transmitting a corresponding (candidate) measurement beam to the UE using the updated measurement resource. Accordingly, the UE may obtain, through beam measurement, an updated beam measurement result for a (candidate) measurement beam transmitted with the updated measurement resource.

In a first example of the updated measurement resource, the updated measurement resource configured by the electronic device 1000 may include an updated time and/or frequency resource of a reference signal (a downlink reference signal for carrying a measurement beam) corresponding to a measurement beam. In other words, the updated measurement resource may include updated time resource for a (candidate) measurement beam of the beam set C (also referred to as an original Set C) that has no change in terms of beams. Accordingly, the information on updated measurement resource generated and transmitted by the electronic device 1000 may indicate an updated time and/or frequency resource of a reference signal corresponding to a measurement beam. In a preferred example, the updated measurement resource may include updated time resource of a downlink reference signal for carrying a measurement beam, and the information on the updated measurement resource indicates the updated time resource.

In this way, for example, an updated beam measurement result is obtained by using the (candidate) measurement beam of the original Set C via the above-described retransmission by the electronic device 1000 as a gNB and the remeasurement by the UE. Accordingly, it can be avoided that unsatisfactoriness of a beam measurement result caused by the UE, such as due to mobility, temporarily locating at a disadvantageous position is regarded as unsatisfactoriness of the beam prediction model itself, which may further leads to inappropriate decisions.

In a second example of the updated measurement resource, alternatively (or additionally), the updated measurement resource configured by the electronic device 1000 may include an updated measurement beam, and the updated measurement beam preferably includes at least a newly added measurement beam. In other words, the updated measurement resource may include a measurement beam included in an updated beam set C (updated Set C).

The electronic device 1000 may determine the updated measurement beam in various manners. For example, the manners may include, but not limited to: randomly determining, from all possible (for example, 64) downlink beams, multiple beams with a number greater than or equal to the number of beams in the original Set C; selecting, from all possible (for example, 64) downlink beams, a beam(s) with a wider spatial range than a coverage of a beam in the original Set C; retaining all beams in the original Set C, and determining, randomly or based on a spatial coverage, a new beam from all possible (for example, 64) downlink beams; in a case where the electronic device 1000 receives a detailed non-conformance report and/or a specific beam measurement result from the UE, retaining only a beam with higher beam quality among beams in the original Set C, and determining, randomly or based on a spatial coverage, a new beam from all possible (for example 64) downlink beams; and the like.

Accordingly, information on the updated measurement resource generated and transmitted by the electronic device 1000 may indicate the updated measurement beam, and preferably indicate at least the newly added measurement beam, and optionally further indicate a measurement beam that is still usable among the original measurement beams. In other words, information on the updated measurement resource may indicate a (candidate) measurement beam of the beam set C (updated Set C) that has a change in terms of beams.

In this way, for example, an updated beam measurement result is obtained by using the (candidate) measurement beam of the updated Set C via the above-described retransmission by the electronic device 1000 as a gNB and the remeasurement by the UE. Accordingly, it can be avoided that unsatisfactoriness of a beam measurement result caused by a spatial coverage of (candidate) measurement beams in the original Set C being not suitable for a current wireless mobile environment of the UE is regarded as unsatisfactory of the beam prediction model itself, which may further leads to inappropriate decisions.

In practical applications, there is a situation where the updated beam measurement result obtained by the UE still fails to meet the requirement (Set B requirement) of the beam prediction model for input data. Optionally, as shown in FIG. 5, the UE may transmit an updated non-conformance report to the electronic device 1000 as a gNB in a case where the obtained updated beam measurement result fails to meet the requirement; and alternatively or additionally, transmit the obtained updated beam measurement result to the electronic device 1000 as a gNB (regardless of whether the updated beam measurement result meets the requirement).

The electronic device 1000 may make a decision based on the updated non-conformance report and/or updated beam measurement result received from the UE, including but not limited to: determining to switch back to a traditional beam management model; in a case where the beam prediction model is deployed on the network side, determining to perform model switching, and selecting an alternative beam prediction model such that, for example, the updated beam measurement result meets a requirement of the alternative beam prediction model (which may require a smaller Set B and/or lower beam quality than the current beam prediction model, or the like); and the like.

### (Example of situation where beam prediction model is deployed on network side)

For the case where the beam prediction model is deployed on the network side, the memory 1020 of the electronic device 1000 as a gNB and the computer program code included therein may be configured to cause, through the processor 1010, the electronic device 1000 to: receive, from the UE, the beam measurement result obtained by the UE (regardless of whether the beam measurement result meets the requirement of the beam prediction model for input data).

In an example, in a case where the beam measurement result fails to meet an input requirement of the beam prediction model, the electronic device 1000 may perform subsequent processing based on the beam measurement result and the received non-conformance report. As shown in FIG. 6, processing performed by the electronic device 1000 as a gNB may include: selecting an alternative beam prediction model such that the obtained beam measurement result meets a requirement of the alternative beam prediction model for a to-be-inputted beam measurement result (where the alternative beam prediction model may require a smaller Set B and/or lower beam quality than the current beam prediction model, or the like); and optionally, transmit relevant information on the alternative beam prediction model to the UE. Next, although not shown in the figure, the UE and the electronic device 1000 as a gNB may use the alternative beam prediction model as a beam prediction model after switching, for example, to perform processing related to beam prediction in various appropriate ways (such as an existing way).

In another example, in a case where the beam measurement result meets the input requirement of the beam prediction model, the electronic device 1000 may obtain predicted beam information based on the beam prediction model using a beam measurement result that meets the requirement. As shown in FIG. 7, processing performed by the electronic device 1000 as a gNB may include: obtaining predicted beam information based on the beam prediction model using a beam measurement result that meets a requirement of the beam prediction model for input data.

Optionally, as shown in FIG. 7, the processing performed by the electronic device 1000 as a gNB may further include: determining an optimal beam based on the predicted beam information and perform data transmission using the optimal beam. Accordingly, the UE may perform the following processing or operation: determining that a signal quality is lower than a predetermined threshold; and transmitting a low-quality report and/or switching request to the electronic device 1000 as a gNB. The electronic device 1000 as a gNB that receives the low-quality report and/or switching request may switch back to traditional beam management, or (attempt to) switch to an alternative beam prediction model (for example, re-select a model based on various standards), or start a beam model supervision mechanism, or the like, which is not described in further detail here.

### (Example of situation where beam prediction model is deployed on terminal side)

For the case where the beam prediction model is deployed on the terminal side, the UE does not necessarily transmit a beam measurement result that fails to meet the requirement of the beam prediction model for input data to the electronic device 1000 as a network-side device, but may, for example, perform model switching directly; and the UE may perform beam prediction directly using a beam measurement result that meets the requirement.

As described above, as an example, FIG. 8 illustrates an example signaling interaction between a UE and the electronic device 1000 as a gNB in a case where a beam measurement result fails to meet a requirement. As shown in FIG. 8, the electronic device 1000 as a gNB may receive, from the UE, relevant information on an alternative beam prediction model (for example, but not limited to, identification information of the alternative beam prediction model, a necessary application condition, and a model switching related delay), where the beam measurement result obtained by the UE meets a requirement of the alternative beam prediction model for a to-be-inputted beam measurement result. Next, although not shown in the figure, the electronic device 1000 as a gNB and the UE may use the alternative beam prediction model as a beam prediction model after switching, for example, to perform processing related to beam prediction in various appropriate ways (such as an existing way).

In addition, as described above, as another example, FIG. 9 illustrates an example signaling interaction between a UE and the electronic device 1000 as a gNB in a case where a beam measurement result meets a requirement. As shown in FIG. 9, the electronic device 1000 as a gNB may receive, from the UE, the predicted beam information obtained by the UE. Thereafter, the electronic device 1000 as a gNB may perform processing similar to that in FIG. 7, such as determining an optimal beam based on the predicted beam information, performing data transmission using the optimal beam, receiving a low-quality report and/or switching request, making a relevant decision in response to the low-quality report and/or switching request, which is not described in further detail here.

### [3.3 Other (Training and Optimization of Beam Prediction Model)]

As mentioned above, the beam prediction model involved in the present disclosure may be implemented using a convolutional neural network (CNN). The CNN is powerful when processing image data or data with spatial relationships, and is suitable for problems related to location such as beam ID and RSRP. The beam prediction model may be obtained through a training or optimization process such as that schematically shown in FIG. 11, and is preferably deployed on the network side such as the electronic device 1000 as a gNB. An example process for obtaining a CNN-based beam prediction model is outlined here.

### (1) Data preparation:

A data set of beam measurement results including beam IDs (example of identification information) and RSRPs (example of beam quality) of beams may be collected and organized. In this data, each beam measurement result includes relevant information labeling an actually used beam in a subsequent process (ID, RSRP, and the like, of the actually used beam). The data set may be divided into a training set and a test set, to ensure balance of the data set.

### (2) Model design:

The CNN may be designed in an architecture including a convolutional layer, a pooling layer, a fully connected layer, and the like. An input to the CNN is a beam measurement result in the data set, and an output of the CNN is predicted beam information including a beam ID and RSRP of a predicted beam. For beam ID, the last layer of the CNN performs multi-class classification using a softmax activation function. Regarding the regression problem of RSRP, the last layer of the CNN performs regression prediction using a linear activation function (or without using an activation function).

### (3) Training and optimization:

The CNN may be trained with the training set, where an appropriate loss function (cross-entropy loss or mean square error loss) may be applied. An appropriate optimization algorithm, such as stochastic gradient descent (SGD) or Adam's algorithm, may be applied to minimize the loss function. Model performance may be improved by adjusting a hyperparameter of the CNN, including learning rate, batch size, and the like.

### (4) Model evaluation and tuning:

The trained CNN may be evaluated using the test set, where accuracy, mean square error (MSE) or other metrics are usually utilized. The model may be tuned based on an evaluation result, where adjustment of a network architecture or more training iterations may be required.

As the expected performance is achieved, the model may be deployed into a practical application, such as in the network-side electronic device 1000 (or alternatively, in the terminal-side electronic device 200) described above, for prediction of beam ID and RSRP.

### <4. Method Embodiment>

Corresponding to the apparatus embodiments, the present disclosure provides the following method embodiments.

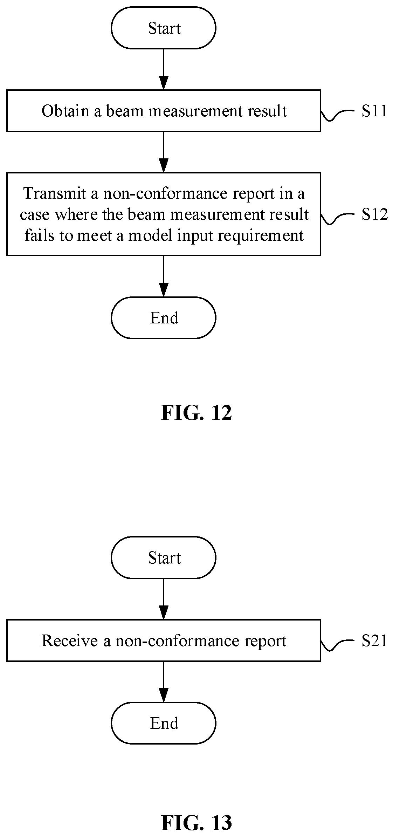

FIG. 12 is a flowchart illustrating a process example of a method for wireless communication according to a first embodiment of the present disclosure.

As shown in FIG. 12, in step S11, a beam measurement result for a measurement beam may be obtained. In step S12, a non-conformance report may be transmitted to a network-side device in a case where the obtained beam measurement result fails to meet a requirement of a beam prediction model for a to-be-inputted beam measurement result.

As an example, the requirement may include one or more of the following: a number of measurement beams with beam qualities above a predetermined threshold; a beam quality of a measurement beam; or a ranking of beam qualities of measurement beams. For example, the beam quality may include an absolute intensity or relative intensity of the measurement beam.

Optionally, although not shown in the figure, the method in an embodiment may further include: receiving, from the network-side device, information on an updated measurement resource for obtaining a beam measurement result, the updated measurement resource being configured for the electronic device based on the non-conformance report.

As an example, the information on the updated measurement resource may indicate an updated time and/or frequency resource of a reference signal corresponding to a measurement beam.

As another example, the information on the updated measurement resource may indicate an updated measurement beam, and may, for example, indicate at least a newly added measurement beam.

Optionally, although not shown in the figure, the method in an embodiment may further include: obtaining an updated beam measurement result for a measurement beam transmitted with the updated measurement resource.

Optionally, although not shown in the figure, the method in an embodiment may further include: transmitting the obtained updated beam measurement result to the network-side device; or transmitting an updated non-conformance report to the network-side device in a case where the obtained updated beam measurement result fails to meet the requirement.

In an example, the beam prediction model is deployed in the network-side device. In this case, although not shown in the figure, the method may further include: transmitting the obtained beam measurement result to the network-side device.

In another example, the beam prediction model is deployed in the electronic device. In this case, although not shown in the figure, the method may further include: selecting an alternative beam prediction model such that the obtained beam measurement result meets a requirement of the alternative beam prediction model for a to-be-inputted beam measurement result; and optionally, transmitting relevant information on the alternative beam prediction model to the network-side device. Furthermore, although not shown in the figure, the method may further include: obtaining predicted beam information based on the beam prediction model using a beam measurement result that meets the requirement.

According to an embodiment of the present disclosure, a subject that performs the method may be the electronic device 200 according to the first embodiment of the present disclosure. Therefore, the previous embodiments of the electronic device 200 are applicable here.

FIG. 13 is a flowchart illustrating a process example of a method for wireless communication according to a second embodiment of the present disclosure.

As shown in FIG.13, in step S21, a non-conformance report may be received from a terminal device, the report indicating that a beam measurement result for a measurement beam obtained by the terminal device fails to meet a requirement of a beam prediction model for a to-be-inputted beam measurement result.

As an example, the requirement may include one or more of the following: a number of measurement beams with beam qualities above a predetermined threshold; a beam quality of a measurement beam; or a ranking of beam qualities of measurement beams. For example, the beam quality may include an absolute intensity or relative intensity of a measurement beam.

Optionally, although not shown in the figure, the method in an embodiment may further include: configuring, for the terminal device based on the non-conformance report, updated measurement resource for obtaining a beam measurement result; and generating and transmitting information on the updated measurement resource to the terminal device.

As an example, the updated measurement resource may include an updated time and/or frequency resource of a reference signal corresponding to a measurement beam.

As another example, the updated measurement resource may include an updated measurement beam, and, for example, include at least a newly added measurement beam.

Optionally, although not shown in the figure, the method in an embodiment may further include: obtaining an updated beam measurement result for a measurement beam transmitted with the updated measurement resource.

Optionally, although not shown in the figure, the method in an embodiment may further include receiving, from the terminal device, one or more of the following: an updated beam measurement result for a measurement beam transmitted with the updated measurement resource; or an updated non-conformance report indicating that the updated beam measurement result obtained by the terminal device fails to meet the requirement.

In an example, the beam prediction model is deployed in the electronic device. In this case, although not shown in the figure, the method may further include: receiving, from the terminal device, relevant information on an alternative beam prediction model, where the beam measurement result obtained by the terminal device meets a requirement of the alternative beam prediction model for a to-be-inputted beam measurement result.

In another example, the beam prediction model is deployed in an electronic device on a network side that performs the method according to an embodiment. In this case, although not shown in the figure, the method may further include: receiving, from the terminal device, the beam measurement result obtained by the terminal device. In addition, although not shown in the figure, the method may further include: selecting an alternative beam prediction model such that the beam measurement result obtained by the terminal device meets a requirement of the alternative beam prediction model for a to-be-inputted beam measurement result; and/or obtaining predicted beam information based on the beam prediction model using a beam measurement result that meets the requirement.

According to an embodiment of the present disclosure, a subject that performs the method may be the electronic device 1000 according to the second embodiment of the present disclosure. Therefore, the previous embodiments of the electronic device 1000 are applicable here.

### <5. Application example>

The technology of the present disclosure is applicable to various products.

The electronic device according to the first embodiment is implemented on a terminal device side. The electronic device may be various user equipment, which may be implemented as a terminal device (such as a smart phone, a tablet personal computer (PC), a notebook PC, a portable game terminal, a portable/dongle-type mobile router, and a digital camera) or a vehicle-mounted terminal (such as an automobile navigation device). The electronic device may be implemented as a terminal that performs machine-to-machine (M2M) communications (which is also referred to as a machine type communication (MTC) terminal). Furthermore, the electronic device may be a wireless communication module (such as an integrated circuit module including a single wafer) installed on each user equipment described above.

The electronic device according to the second embodiment is implemented on a network side such as a base station side. The electronic device may be implemented as a base station device in any type, such as a macro eNB and a small eNB, or may be implemented as a gNB (a base station in a 5G system) in any type. The small eNB may be an eNB covering a cell smaller than a macro cell, such as a pico eNB, a micro eNB, or a home (femto) eNB. Alternatively, the base station may be implemented as any other type of base station, such as a NodeB or a base transceiver station (BTS). The base station may include: a body (which is also referred to as a base station device) configured to control wireless communications; and one or more remote radio heads (RRHs) arranged at a different place from the body.

In addition, the electronic device according to the second embodiment may be implemented as a TRP in any type. The TRP may have functions of transmitting and receiving. For example, the TRP may receive information from a terminal device and a base station device, and may transmit information to the terminal device and the base station device. In a typical example, the TRP may provide services to the terminal device and is controlled by the base station device. Furthermore, the TRP may have a structure similar to that of the base station device, or may have merely a structure related to information transmitting and receiving in the base station device.

### [Application Examples of Base Station]

### (First Application Example)

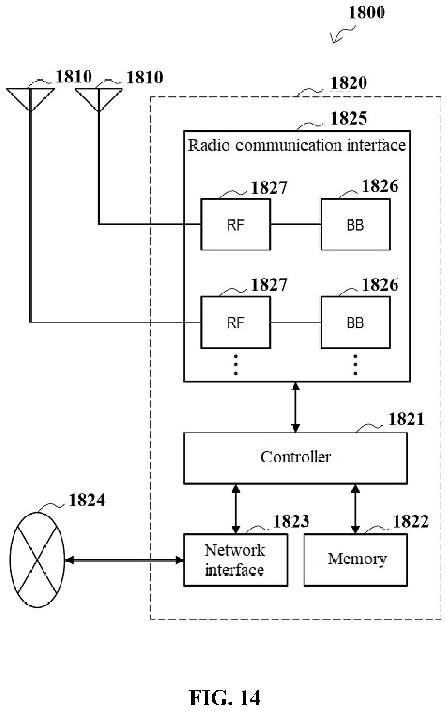

FIG. 14 is a block diagram illustrating a first example of a schematic configuration of an eNB to which the technology of the present disclosure is applicable. An eNB 1800 includes one or more antennas 1810 and a base station device 1820. The base station device 1820 and each of the antennas 1810 may be connected to each other via a RF cable.

Each of the antennas 1810 includes a single or multiple antenna elements (such as multiple antenna elements included in a multi-input multi-output (MIMO) antenna), and is used for the base station device 1820 to transmit and receive radio signals. As shown in FIG. 14, the eNB 1800 may include multiple antennas 1810. For example, the multiple antennas 1810 may be compatible with multiple frequency bands used by the eNB 1800. Although FIG. 14 illustrates an example in which the eNB 1800 includes multiple antennas 1810, the eNB 1800 may include a single antenna 1810.

The base station device 1820 includes a controller 1821, a memory 1822, a network interface 1823, and a radio communication interface 1825.

The controller 1821 may be, for example, a CPU or a DSP, and operates various functions of a higher layer of the base station device 1820. For example, the controller 1821 generates a data packet based on data in a signal processed by the radio communication interface 1825, and transfers the generated packet via the network interface 1823. The controller 1821 may bundle data from multiple baseband processors to generate a bundled packet, and transfer the generated bundled packet. The controller 1821 may have logical functions of performing control such as radio resource control, radio bearer control, mobility management, admission control, and scheduling. The control may be performed in conjunction with a nearby eNB or a core network node. The memory 1822 includes an RAM and an ROM, and stores a program executed by the controller 1821 and various types of control data (such as a terminal list, transmission power data, and scheduling data).

The network interface 1823 is a communication interface for connecting the base station device 1820 to a core network 1824. The controller 1821 may communicate with the core network node or another eNB via the network interface 1823. In this case, the eNB 1800 and the core network node or another eNB may be connected to each other through a logical interface (such as an S1 interface and an X2 interface). The network interface 1823 may be a wired communication interface or a radio communication interface for a wireless backhaul line. In a case that the network interface 1823 is a radio communication interface, the network interface 1823 may use a higher frequency band for wireless communications than a frequency band used by the radio communication interface 1825.

The radio communication interface 1825 supports any cellular communication scheme (such as Long-Term Evolution (LTE) and LTE-Advanced), and provides wireless connection to a terminal in a cell of the eNB 1800 via the antenna 1810. The radio communication interface 1825 may typically include, for example, a baseband (BB) processor 1826 and an RF circuit 1827. The BB processor 1826 may perform, for example, coding/decoding, modulation/demodulation and multiplexing/de-multiplexing, and perform various types of signal processes of layers (for example, L1, media access control (MAC), radio link control (RLC) and packet data convergence protocol (PDCP)). Instead of the controller 1821, the BB processor 1826 may have a part or all of the above-mentioned logical functions. The BB processor 1826 may be a memory storing a communication control program, or a module including a processor and a related circuit configured to execute the program. Updating the program may change the functions of the BB processor 1826. The module may be a card or blade inserted into a slot of the base station device 1820. Alternatively, the module may be a chip mounted on a card or blade. In addition, the RF circuit 1827 may include, for example, a mixer, a filter and an amplifier, and transmit and receive a radio signal via the antenna 1810.

As shown in FIG. 14, the radio communication interface 1825 may include multiple BB processors 1826. For example, the multiple BB processors 1826 may be compatible with multiple frequency bands used by the eNB 1800. As shown in FIG. 14, the radio communication interface 1825 may include multiple RF circuits 1827. For example, the multiple RF circuits 1827 may be compatible with multiple antenna elements. Although FIG. 14 illustrates an example in which the radio communication interface 1825 includes multiple BB processors 1826 and multiple RF circuits 1827, the radio communication interface 1825 may include a single BB processor 1826 or a single RF circuit 1827.

In the eNB 1800 shown in FIG. 14, the transceiver in the electronic device 1000 described with reference to FIG. 10 may be implemented through the radio communication interface 1825 and an optional antenna 1810. At least part of the functions of the processor in the electronic device 1000 may be implemented by the controller 1821. The function of the memory in the electronic device 1000 may be implemented through the memory 1822. For example, the controller 1821 may implement at least part of the functions of the processor by executing instructions stored in the memory 1822.

### (Second Application Example)

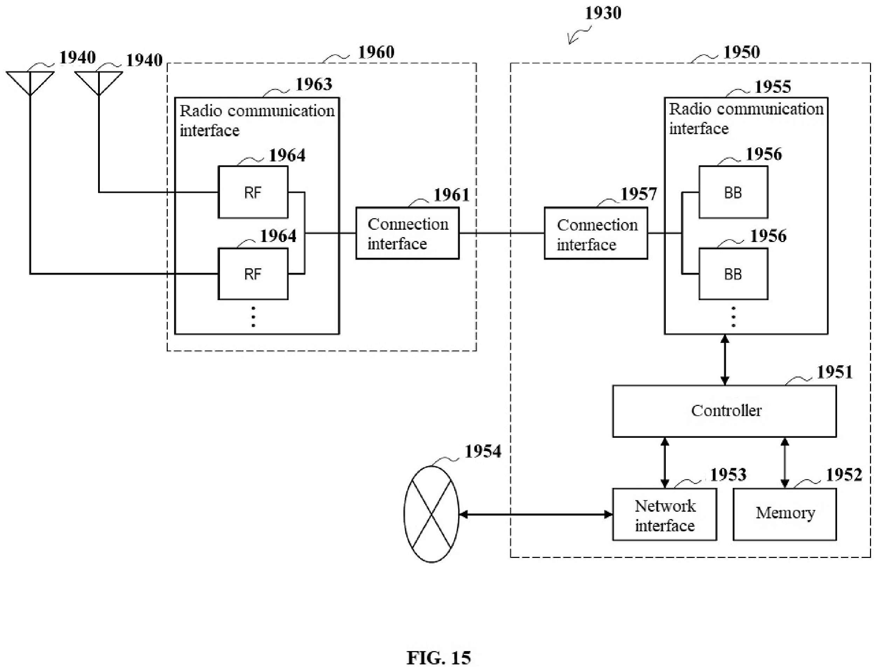

FIG. 15 is a block diagram illustrating a second example of a schematic configuration of an eNB to which the technology of the present disclosure is applicable. An eNB 1930 includes a single or multiple antennas 1940, a base station device 1950 and an RRH 1960. The RRH 1960 and each of the antennas 1940 may be connected to each other via an RF cable. The base station device 1950 and the RRH 1960 may be connected to each other via a high-speed line such as an optical fiber cable.

Each of the antennas 1940 includes a single or multiple antenna elements (such as multiple antenna elements included in a MIMO antenna), and is used for the RRH 1960 to transmit and receive a radio signal. As shown in FIG. 15, the eNB 1930 may include multiple antennas 1940. For example, the multiple antennas 1940 may be compatible with multiple frequency bands used by the eNB 1930. Although FIG. 15 illustrates an example in which the eNB 1930 includes multiple antennas 1940, the eNB 1930 may include a single antenna 1940.

The base station device 1950 includes a controller 1951, a memory 1952, a network interface 1953, a radio communication interface 1955, and a connection interface 1957. The controller 1951, the memory 1952, and the network interface 1953 are the same as the controller 1821, the memory 1822, and the network interface 1823 described with reference to FIG. 14.

The radio communication interface 1955 supports any cellular communication scheme (such as LTE and LTE-advanced), and provides wireless communications to a terminal located in a sector corresponding to the RRH 1960 via the RRH 1960 and the antenna 1940. The radio communication interface 1955 may typically include, for example, a BB processor 1956. The BB processor 1956 is the same as the BB processor 1826 described with reference to FIG. 14, except that the BB processor 1956 is connected to an RF circuit 1964 of the RRH 1960 via the connection interface 1957. As shown in FIG. 15, the radio communication interface 1955 may include multiple BB processors 1956. For example, the multiple BB processors 1956 may be compatible with multiple frequency bands used by the eNB 1930. Although FIG. 15 illustrates an example in which the radio communication interface 1955 includes multiple BB processors 1956, the radio communication interface 1955 may include a single BB processor 1956.

The connection interface 1957 is an interface for connecting the base station device 1950 (the radio communication interface 1955) to the RRH 1960. The connection interface 1957 may be a communication module for communication in the above-described high-speed line that connects the base station device 1950 (the radio communication interface 1955) to the RRH 1960.

The RRH 1960 includes a connection interface 1961 and a radio communication interface 1963.

The connection interface 1961 is an interface for connecting the RRH 1960 (the radio communication interface 1963) to the base station device 1950. The connection interface 1961 may be a communication module for communication in the above-mentioned high-speed line.

The radio communication interface 1963 transmits and receives radio signals via the antenna 1940. The radio communication interface 1963 may typically include, for example, the RF circuit 1964. The RF circuit 1964 may include, for example, a mixer, a filter and an amplifier, and transmit and receive radio signals via the antenna 1940. As shown in FIG. 15, the radio communication interface 1963 may include multiple RF circuits 1964. For example, the multiple RF circuits 1964 may support multiple antenna elements. Although FIG. 15 illustrates an example in which the radio communication interface 1963 includes multiple RF circuits 1964, the radio communication interface 1963 may include a single RF circuit 1964.

In the eNB 1930 shown in FIG. 15, the transceiver in the electronic device 1000 described with reference to FIG. 10 may be implemented through the radio communication interface 1963 and an optional antenna 1940, for example. At least part of the functions of the processor in the electronic device 1000 may be implemented by the controller 1951. The function of the memory in the electronic device 1000 may be implemented through the memory 1952. For example, the controller 1951 may implement at least part of the functions of the processor by executing instructions stored in the memory 1952.

### <Application Examples of Terminal Device>

### (First Application Example)

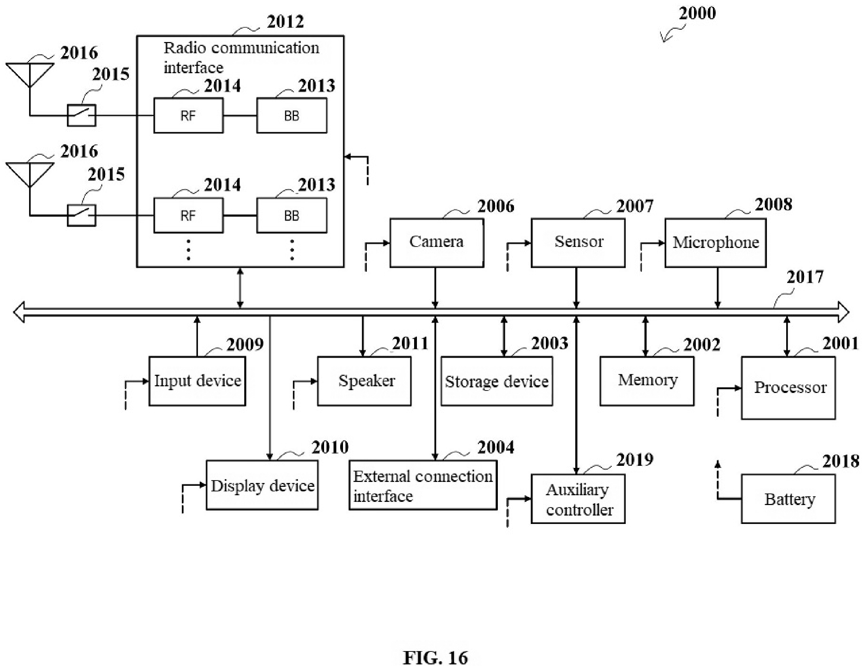

FIG. 16 is a block diagram illustrating an example of a schematic configuration of a smart phone 2000 to which the technology of the present disclosure is applicable. The smart phone 2000 includes a processor 2001, a memory 2002, a storage device 2003, an external connection interface 2004, a camera 2006, a sensor 2007, a microphone 2008, an input device 2009, a display device 2010, a speaker 2011, a radio communication interface 2012, one or more antenna switches 2015, one or more antennas 2016, a bus 2017, a battery 2018, and an auxiliary controller 2019.

The processor 2001 may be, for example, a CPU or a system on chip (SoC), and controls functions of the application layer and other layers of the smart phone 2000. The memory 2002 includes an RAM and an ROM, and stores data and programs executed by the processor 2001. The storage device 2003 may include a storage medium, such as a semiconductor memory and a hard disk. The external connection interface 2004 is an interface for connecting an external device (such as a memory card and a universal serial bus (USB) device) to the smart phone 2000.

The camera 2006 includes an image sensor (such as a charge coupled device (CCD) and a complementary metal oxide semiconductor (CMOS)), and generates a captured image. The sensor 2007 may include a group of sensors, such as a measurement sensor, a gyroscope sensor, a geomagnetic sensor, and an acceleration sensor. The microphone 2008 converts sound inputted to the smart phone 2000 into an audio signal. The input device 2009 includes, for example, a touch sensor configured to detect a touch on a screen of the display device 2010, a keypad, a keyboard, a button, or a switch, and receives an operation or information inputted from a user. The display device 2010 includes a screen, such as a liquid crystal display (LCD) or an organic light emitting diode (OLED) display, and displays an output image of the smart phone 2000. The speaker 2011 converts the audio signal outputted from the smart phone 2000 into sound.

The radio communication interface 2012 supports any cellular communication scheme (such as LTE and LTE-Advanced), and performs wireless communications. The radio communication interface 2012 may generally include, for example, a BB processor 2013 and an RF circuit 2014. The BB processor 2013 may perform, for example, encoding/decoding, modulation/demodulation, and multiplexing/demultiplexing, and perform various types of signal processing for wireless communications. In addition, the RF circuit 2014 may include, for example, a mixer, a filter and an amplifier, and transmit and receive a radio signal via the antenna 2016. The radio communication interface 2012 may be a chip module on which the BB processor 2013 and the RF circuit 2014 are integrated. As shown in FIG. 16, the radio communication interface 2012 may include multiple BB processors 2013 and multiple RF circuits 2014. Although FIG. 16 illustrates an example in which the radio communication interface 2012 includes multiple BB processors 2013 and multiple RF circuits 2014, the radio communication interface 2012 may include a single BB processor 2013 or a single RF circuit 2014.

In addition to the cellular communication scheme, the radio communication interface 2012 may support another type of wireless communication scheme, such as a short-range wireless communication scheme, a near field communication scheme, and a wireless local area network (LAN) scheme. In this case, the radio communication interface 2012 may include a BB processor 2013 and an RF circuit 2014 for each wireless communication scheme.

Each of the antenna switches 2015 switches a connection destination of the antenna 916 among multiple circuits (for example, circuits for different wireless communication schemes) included in the radio communication interface 2012.

Each of the antennas 2016 includes a single or multiple antenna elements (such as multiple antenna elements included in a MIMO antenna), and is configured for the radio communication interface 2012 to transmit and receive radio signals. As shown in FIG. 16, the smart phone 2000 may include multiple antennas 2016. Although FIG. 16 illustrates an example in which the smart phone 2000 includes multiple antennas 2016, the smart phone 2000 may include a single antenna 2016.

In addition, the smart phone 2000 may include antenna(s) 2016 for each wireless communication scheme. In this case, the antenna switches 2015 may be omitted from the configuration of the smart phone 2000.

The processor 2001, the memory 2002, the storage device 2003, the external connection interface 2004, the camera 2006, the sensor 2007, the microphone 2008, the input device 2009, the display device 2010, the speaker 2011, the radio communication interface 2012, and the auxiliary controller 2019 are connected to each other via the bus 2017. The battery 2018 supplies power to each block of the smart phone 2000 as shown in FIG. 16 via a feeder line. The feeder line is partially shown as a dashed line in the figure. The auxiliary controller 2019 operates the least necessary function of the smart phone 2000 in a sleep mode, for example.

In the smart phone 2000 shown in FIG. 16, the transceiver in the electronic device 200 described with reference to FIG. 2 may be implemented through the radio wireless communication interface 2012 and an optional antenna 2016. At least part of the function of the processor in the electronic device 200 may be implemented by the processor 2001 or the auxiliary controller 2019. The function of the memory in the terminal device 200 may be implemented through the memory 2002 or the storage device 2003. For example, the processor 2001 or the auxiliary controller 2019 may implement at least part of the functions of the processor by executing instructions stored in the memory 2002 or the storage device 2003.

### (Second Application Example)

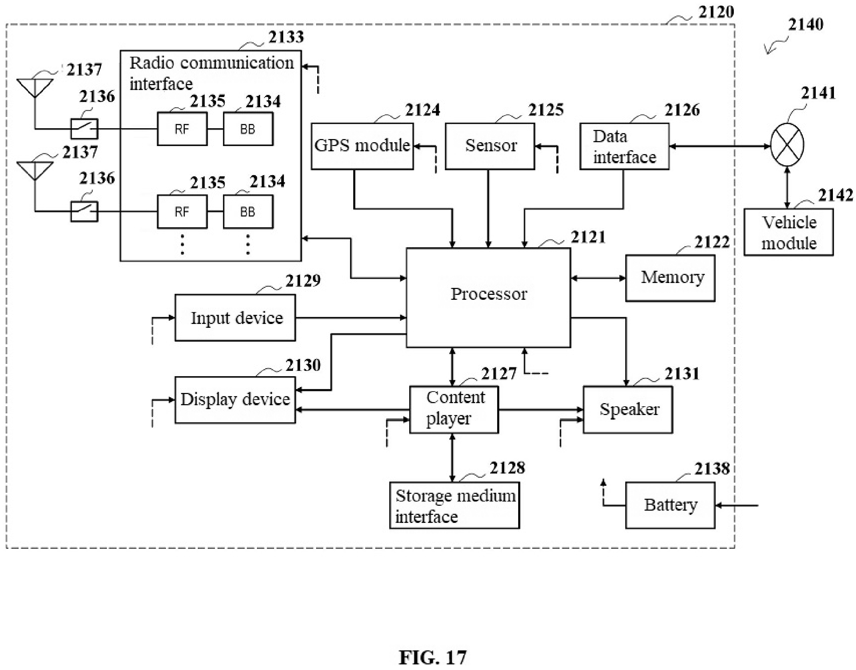

FIG. 17 is a block diagram illustrating an example of a schematic configuration of an automobile navigation device 2120 to which the technology of the present disclosure is applicable. The automobile navigation device 2120 includes a processor 2121, a memory 2122, a global positioning system (GPS) module 2124, a sensor 2125, a data interface 2126, a content player 2127, a storage medium interface 2128, an input device 2129, a display device 2130, a speaker 2131, a radio communication interface 2133, one or more antenna switches 2136, one or more antennas 2137, and a battery 2138.

The processor 2121 may be, for example, a CPU or SoC, and controls the navigation function and other functions of the automobile navigation device 2120. The memory 2122 includes an RAM and an ROM, and stores data and programs executed by the processor 2121.

The GPS module 2124 measures a position (such as latitude, longitude, and altitude) of the automobile navigation device 2120 based on a GPS signal received from a GPS satellite. The sensor 2125 may include a group of sensors, such as a gyroscope sensor, a geomagnetic sensor, and an air pressure sensor. The data interface 2126 is connected to, for example, an in-vehicle network 2141 via a terminal not shown, and acquires data (such as vehicle speed data) generated by a vehicle.

The content player 2127 reproduces content stored in a storage medium (such as a CD and a DVD) inserted into the storage medium interface 2128. The input device 2129 includes, for example, a touch sensor configured to detect a touch on a screen of the display device 2130, a button, or a switch, and receives an operation or information inputted from a user. The display device 2130 includes a screen such as an LCD or OLED display, and displays an image of a navigation function or reproduced content. The speaker 2131 outputs a sound of the navigation function or reproduced content.

The radio communication interface 2133 supports any cellular communication scheme (such as LTE and LTE-Advanced), and performs wireless communications. The radio communication interface 2133 may generally include, for example, a BB processor 2134 and an RF circuit 2135. The BB processor 2134 may perform, for example, encoding/decoding, modulation/demodulation, and multiplexing/demultiplexing, and perform various types of signal processing for wireless communications. In addition, the RF circuit 2135 may include, for example, a mixer, a filter and an amplifier, and transmit and receive a radio signal via the antenna 2137. The radio communication interface 2133 may be a chip module on which the BB processor 2134 and the RF circuit 2135 are integrated. As shown in FIG. 17, the radio communication interface 2133 may include multiple BB processors 2134 and multiple RF circuits 2135. Although FIG. 17 illustrates an example in which the radio communication interface 2133 includes multiple BB processors 2134 and multiple RF circuits 2135, the radio communication interface 2133 may include a single BB processor 2134 or a single RF circuit 2135.

In addition to the cellular communication scheme, the radio communication interface 2133 may support another type of wireless communication scheme, such as a short-range wireless communication scheme, a near field communication scheme, or a wireless LAN scheme. In this case, the radio communication interface 2133 may include a BB processor 2134 and an RF circuit 2135 for each wireless communication scheme.

Each of the antenna switches 2136 switches a connection destination of the antenna 2137 among multiple circuits (such as circuits for different wireless communication schemes) included in the radio communication interface 2133.

Each of the antennas 2137 includes a single or multiple antenna elements (such as multiple antenna elements included in a MIMO antenna), and is configured for the radio communication interface 2133 to transmit and receive radio signals. As shown in FIG. 17, the automobile navigation device 2120 may include multiple antennas 2137. Although FIG. 17 illustrates an example in which the automobile navigation device 2120 includes multiple antennas 2137, the automobile navigation device 2120 may include a single antenna 2137.

In addition, the automobile navigation device 2120 may include antenna(s) 2137 for each wireless communication scheme. In this case, the antenna switches 2136 may be omitted from the configuration of the automobile navigation device 2120.

The battery 2138 supplies power to blocks of the automobile navigation device 2120 shown in FIG. 17 via a feeder line. The feeder line is partially shown as a dashed line in the figure. The battery 2138 accumulates electric power supplied from the vehicle.

In the automobile navigation device 2120 shown in FIG. 17, the transceiver in the electronic device 200 described with reference to FIG. 2 may be implemented through the radio communication interface 2133 and an optional antenna 2137. At least part of the function of the processor in the electronic device 200 may be implemented by the processor 2121. The function of the memory in the electronic device 200 may be implemented through the memory 2122. For example, the processor 2121 may implement at least part of the functions of the processor by executing instructions stored in the memory 2122.

The technology of the present disclosure may be implemented as an in-vehicle system (or vehicle) 2140 including the automobile navigation device 2120, an in-vehicle network 2141, and one or more blocks of vehicle modules 2142. The vehicle modules 2142 generate vehicle data (such as vehicle speed, engine speed, and failure information), and outputs the generated data to the in-vehicle network 2141.

Preferred embodiments of the present disclosure are described above with reference to the drawings. The present disclosure is not limited to the above examples. Various alternations and modifications can be made by those skilled in the art within the scope of the appended claims. It should be understood that these alternations and modifications shall naturally fall within the technical scope of the present disclosure.

For example, units shown by a dotted line block in the functional block diagram shown in the drawings indicate that the functional units are optional in the corresponding device, and the optional functional units may be combined appropriately to achieve required functions.

For example, multiple functions implemented by a single unit in the above embodiments may be implemented by separate devices. Alternatively, multiple functions implemented by multiple units in the above embodiments may be implemented by separate devices respectively. In addition, a single one of the above functions may be implemented by multiple units. Such configurations are naturally included in the technical scope of the present disclosure.

In the specification, steps described in the flowchart include not only the processes performed chronologically as the described sequence, but also the processes performed in parallel or individually rather than chronologically. Furthermore, the steps performed chronologically may be performed in another sequence appropriately.

Furthermore, the present disclosure may have configurations as described below.
1. An electronic device on a terminal side, comprising
   at least one processor; and
   at least one memory comprising computer program code, wherein the at least one memory and the computer program code are configured to cause, through the at least one processor, the electronic device to:
      obtain a beam measurement result for a measurement beam; and
      transmit a non-conformance report to a network-side device in a case where the obtained beam measurement result fails to meet a requirement of a beam prediction model for a to-be-inputted beam measurement result.
2. The electronic device according to configuration 1, wherein the requirement comprises one or more of the following:
   a number of measurement beams with beam qualities above a predetermined threshold;
   a beam quality of a measurement beam; or
   a ranking of beam qualities of measurement beams.
3. The electronic device according to configuration 2, wherein the beam quality comprises an absolute intensity and/or relative intensity of the measurement beam.
4. The electronic device according to configuration 1, wherein the at least one memory and the computer program code are further configured to cause, through the at least one processor, the electronic device to:
   receive, from the network-side device, information on an updated measurement resource for obtaining a beam measurement result, the updated measurement resource being configured for the electronic device based on the non-conformance report.
5. The electronic device according to configuration 4, wherein the information on the updated measurement resource indicates an updated time and/or frequency resource of a reference signal corresponding to a measurement beam.
6. The electronic device according to configuration 4, wherein the information on the updated measurement resource indicates an updated measurement beam.
7. The electronic device according to configuration 6, wherein the information on the updated measurement resource at least indicates a newly added measurement beam.
8. The electronic device according to configuration 4, wherein the at least one memory and the computer program code are further configured to cause, through the at least one processor, the electronic device to:
   obtain an updated beam measurement result for a measurement beam transmitted with the updated measurement resource.
9. The electronic device according to configuration 8, wherein the at least one memory and the computer program code are further configured to cause, through the at least one processor, the electronic device to execute one or more of the following:
   transmitting the obtained updated beam measurement result to the network-side device;
      or
   transmitting an updated non-conformance report to the network-side device in a case where the obtained updated beam measurement result fails to meet the requirement.
10. The electronic device according to configuration 1, wherein the beam prediction model is deployed in the network-side device, and wherein the at least one memory and the computer program code are further configured to cause, through the at least one processor, the electronic device to:
   transmit the obtained beam measurement result to the network-side device.
11. The electronic device according to configuration 1, wherein the beam prediction model is deployed in the electronic device.
12. The electronic device according to configuration 11, wherein the at least one memory and the computer program code are further configured to cause, through the at least one processor, the electronic device to:
   select an alternative beam prediction model such that the obtained beam measurement result meets a requirement of the alternative beam prediction model for a to-be-inputted beam measurement result.
13. The electronic device according to configuration 12, wherein the at least one memory and the computer program code are further configured to cause, through the at least one processor, the electronic device to:
   transmit relevant information on the alternative beam prediction model to the network-side device.
14. The electronic device according to configuration 11, wherein the at least one memory and the computer program code are further configured to cause, through the at least one processor, the electronic device to:
   obtain predicted beam information based on the beam prediction model using a beam measurement result that meets the requirement.
15. An electronic device on a network side, comprising
   at least one processor; and
   at least one memory comprising computer program code, wherein the at least one memory and the computer program code are configured to cause, through the at least one processor, the electronic device to:
      receive, from a terminal device, a non-conformance report indicating that a beam measurement result for a measurement beam obtained by the terminal device fails to meet a requirement of a beam prediction model for a to-be-inputted beam measurement result.
16. The electronic device according to configuration 15, wherein the requirement comprises one or more of the following:
   a number of measurement beams with beam qualities above a predetermined threshold;
   a beam quality of a measurement beam; or
   a ranking of beam qualities of measurement beams.
17. The electronic device according to configuration 16, wherein the beam quality comprises an absolute intensity and/or relative intensity of a measurement beam.
18. The electronic device according to configuration 15, wherein the at least one memory and the computer program code are further configured to cause, through the at least one processor, the electronic device to:
   configure, for the terminal device based on the non-conformance report, an updated measurement resource for obtaining a beam measurement result; and
   generate and transmit information on the updated measurement resource to the terminal device.
19. The electronic device according to configuration 18, wherein the updated measurement resource comprises an updated time and/or frequency resource of a reference signal corresponding to a measurement beam.
20. The electronic device according to configuration 18, wherein the updated measurement resource comprises an updated measurement beam.
21. The electronic device according to configuration 20, wherein the updated measurement beam at least comprises a newly added measurement beam.
22. The electronic device according to configuration 18, wherein the at least one memory and the computer program code are further configured to cause, through the at least one processor, the electronic device to:
   receive, from the terminal device, one or more of the following:
   an updated beam measurement result for a measurement beam transmitted with the updated measurement resource; or
   an updated non-conformance report indicating that the updated beam measurement result obtained by the terminal device fails to meet the requirement.
23. The electronic device according to configuration 15, wherein the beam prediction model is deployed in the terminal device.
24. The electronic device according to configuration 23, wherein the at least one memory and the computer program code are further configured to cause, through the at least one processor, the electronic device to:
   receive, from the terminal device, relevant information on an alternative beam prediction model, wherein the beam measurement result obtained by the terminal device meets a requirement of the alternative beam prediction model for a to-be-inputted beam measurement result.
25. The electronic device according to configuration 15, wherein the beam prediction model is deployed in the electronic device, and wherein the at least one memory and the computer program code are further configured to cause, through the at least one processor, the electronic device to:
   receive, from the terminal device, the beam measurement result obtained by the terminal device.
26. The electronic device according to configuration 25, wherein the at least one memory and the computer program code are further configured to cause, through the at least one processor, the electronic device to:
   select an alternative beam prediction model such that the beam measurement result obtained by the terminal device meets a requirement of the alternative beam prediction model for a to-be-inputted beam measurement result.
27. The electronic device according to configuration 25, wherein the at least one memory and the computer program code are further configured to cause, through the at least one processor, the electronic device to:
   obtain predicted beam information based on the beam prediction model using a beam measurement result that meets the requirement.
28. A method for wireless communication, comprising:
   obtaining a beam measurement result for a measurement beam; and
   transmitting a non-conformance report to a network-side device in a case where the obtained beam measurement result fails to meet a requirement of a beam prediction model for a to-be-inputted beam measurement result.
29. A method for wireless communication, comprising:
   receiving, from a terminal device, a non-conformance report indicating that a beam measurement result for a measurement beam obtained by the terminal device fails to meet a requirement of a beam prediction model for a to-be-inputted beam measurement result.
30. A non-transitory computer-readable storage medium storing computer program code, wherein the computer program code causes, through a processor in an electronic device, the electronic device to perform the method according to configuration 28 or 29.

Although the embodiments of the present disclosure are described in detail above with reference to the accompanying drawings, it should be understood that the embodiments are only for illustrating the present disclosure and do not constitute a limitation of the present disclosure. For those skilled in the art, various modifications and changes can be made to the embodiments without departing from the essence and scope of the present disclosure. Therefore, the scope of the present disclosure is limited by only the appended claims and equivalents thereof.

## Claims

1. An electronic device on a terminal side, comprising
at least one processor; and
at least one memory comprising computer program code, wherein the at least one memory and the computer program code are configured to cause, through the at least one processor, the electronic device to:
obtain a beam measurement result for a measurement beam; and
transmit a non-conformance report to a network-side device in a case where the obtained beam measurement result fails to meet a requirement of a beam prediction model for a to-be-inputted beam measurement result.

2. The electronic device according to claim 1, wherein the requirement comprises one or more of the following:
a number of measurement beams with beam qualities above a predetermined threshold;
a beam quality of a measurement beam; or
a ranking of beam qualities of measurement beams.

3. The electronic device according to claim 2, wherein the beam quality comprises an absolute intensity and/or relative intensity of the measurement beam.

4. The electronic device according to claim 1, wherein the at least one memory and the computer program code are further configured to cause, through the at least one processor, the electronic device to:
receive, from the network-side device, information on an updated measurement resource for obtaining a beam measurement result, the updated measurement resource being configured for the electronic device based on the non-conformance report.

5. The electronic device according to claim 4, wherein the information on the updated measurement resource indicates an updated time and/or frequency resource of a reference signal corresponding to a measurement beam.

6. The electronic device according to claim 4, wherein the information on the updated measurement resource indicates an updated measurement beam.

7. The electronic device according to claim 6, wherein the information on the updated measurement resource at least indicates a newly added measurement beam.

8. The electronic device according to claim 4, wherein the at least one memory and the computer program code are further configured to cause, through the at least one processor, the electronic device to:
obtain an updated beam measurement result for a measurement beam transmitted with the updated measurement resource.

9. The electronic device according to claim 8, wherein the at least one memory and the computer program code are further configured to cause, through the at least one processor, the electronic device to execute one or more of the following:
transmitting the obtained updated beam measurement result to the network-side device;
or
transmitting an updated non-conformance report to the network-side device in a case where the obtained updated beam measurement result fails to meet the requirement.

10. The electronic device according to claim 1, wherein the beam prediction model is deployed in the network-side device, and wherein the at least one memory and the computer program code are further configured to cause, through the at least one processor, the electronic device to:
transmit the obtained beam measurement result to the network-side device.

11. The electronic device according to claim 1, wherein the beam prediction model is deployed in the electronic device.

12. The electronic device according to claim 11, wherein the at least one memory and the computer program code are further configured to cause, through the at least one processor, the electronic device to:
select an alternative beam prediction model such that the obtained beam measurement result meets a requirement of the alternative beam prediction model for a to-be-inputted beam measurement result.

13. The electronic device according to claim 12, wherein the at least one memory and the computer program code are further configured to cause, through the at least one processor, the electronic device to:
transmit relevant information on the alternative beam prediction model to the network-side device.

14. The electronic device according to claim 11, wherein the at least one memory and the computer program code are further configured to cause, through the at least one processor, the electronic device to:
obtain predicted beam information based on the beam prediction model using a beam measurement result that meets the requirement.

15. An electronic device on a network side, comprising
at least one processor; and
at least one memory comprising computer program code, wherein the at least one memory and the computer program code are configured to cause, through the at least one processor, the electronic device to:
receive, from a terminal device, a non-conformance report indicating that a beam measurement result for a measurement beam obtained by the terminal device fails to meet a requirement of a beam prediction model for a to-be-inputted beam measurement result.

16. The electronic device according to claim 15, wherein the requirement comprises one or more of the following:
a number of measurement beams with beam qualities above a predetermined threshold;
a beam quality of a measurement beam; or
a ranking of beam qualities of measurement beams.

17. The electronic device according to claim 16, wherein the beam quality comprises an absolute intensity and/or relative intensity of a measurement beam.

18. The electronic device according to claim 15, wherein the at least one memory and the computer program code are further configured to cause, through the at least one processor, the electronic device to:
configure, for the terminal device based on the non-conformance report, an updated measurement resource for obtaining a beam measurement result; and
generate and transmit information on the updated measurement resource to the terminal device.

19. The electronic device according to claim 18, wherein the updated measurement resource comprises an updated time and/or frequency resource of a reference signal corresponding to a measurement beam.

20. The electronic device according to claim 18, wherein the updated measurement resource comprises an updated measurement beam.

21. The electronic device according to claim 20, wherein the updated measurement beam at least comprises a newly added measurement beam.

22. The electronic device according to claim 18, wherein the at least one memory and the computer program code are further configured to cause, through the at least one processor, the electronic device to:
receive, from the terminal device, one or more of the following:
an updated beam measurement result for a measurement beam transmitted with the updated measurement resource; or
an updated non-conformance report indicating that the updated beam measurement result obtained by the terminal device fails to meet the requirement.

23. The electronic device according to claim 15, wherein the beam prediction model is deployed in the terminal device.

24. The electronic device according to claim 23, wherein the at least one memory and the computer program code are further configured to cause, through the at least one processor, the electronic device to:
receive, from the terminal device, relevant information on an alternative beam prediction model, wherein the beam measurement result obtained by the terminal device meets a requirement of the alternative beam prediction model for a to-be-inputted beam measurement result.

25. The electronic device according to claim 15, wherein the beam prediction model is deployed in the electronic device, and wherein the at least one memory and the computer program code are further configured to cause, through the at least one processor, the electronic device to:
receive, from the terminal device, the beam measurement result obtained by the terminal device.

26. The electronic device according to claim 25, wherein the at least one memory and the computer program code are further configured to cause, through the at least one processor, the electronic device to:
select an alternative beam prediction model such that the beam measurement result obtained by the terminal device meets a requirement of the alternative beam prediction model for a to-be-inputted beam measurement result.

27. The electronic device according to claim 25, wherein the at least one memory and the computer program code are further configured to cause, through the at least one processor, the electronic device to:
obtain predicted beam information based on the beam prediction model using a beam measurement result that meets the requirement.

28. A method for wireless communication, comprising:
obtaining a beam measurement result for a measurement beam; and
transmitting a non-conformance report to a network-side device in a case where the obtained beam measurement result fails to meet a requirement of a beam prediction model for a to-be-inputted beam measurement result.

29. A method for wireless communication, comprising:
receiving, from a terminal device, a non-conformance report indicating that a beam measurement result for a measurement beam obtained by the terminal device fails to meet a requirement of a beam prediction model for a to-be-inputted beam measurement result.

30. A non-transitory computer-readable storage medium storing computer program code, wherein the computer program code causes, through a processor in an electronic device, the electronic device to perform the method according to claim 28 or 29.
